# EUROPÄISCHE PATENTANMELDUNG

(11) **EP 3 702 144 A1**
(43) Veröffentlichungstag der Anmeldung: **02.09.2020**
(21) Anmeldenummer: 20153755.2
(22) Anmeldetag: 27.01.2020
(51) Int. Cl.: B32B 3/26, B32B 27/08, B60Q 3/54, B60R 13/00, D06N 3/00

(54) **BESCHICHTUNGSMATERIAL AUS KUNSTSTOFF**

(30) Priorität: 01.03.2019 DE 102019202804
(71) Anmelder: Benecke-Kaliko AG, 30419 Hannover (DE)
(72) Erfinder: Mikulski, Sebastian, 30419 Hannover (DE); Barho, Erhard, 30419 Hannover (DE); Senne, Armin, 30419 Hannover (DE)
(74) Vertreter: Kilsch, Armin Ralph

(57) **Zusammenfassung**

Lichtleitendes und/oder mindestens partiell lichtdurchlässiges, flächiges Beschichtungsmaterial aus Kunststoff als Oberflächenbeschichtung eines Gegenstands, wobei das Beschichtungsmaterial als mehrschichtiger Folienverbund ausgebildet ist, wobei der Folienverbund innerhalb seines Schichtaufbaus mindestens eine Folie aufweist, die mit einer gedruckten oder geprägten lichtleitenden oder lichtdurchlässigen Struktur versehen ist.

## Beschreibung

Die Erfindung betrifft ein lichtleitendes und/oder mindestens partiell lichtdurchlässiges, flächiges Beschichtungsmaterial aus Kunststoff als Oberflächenbeschichtung eines Gegenstands, wobei das Beschichtungsmaterial als mehrschichtiger Folienverbund ausgebildet ist. Ebenfalls betrifft die Erfindung ein Verfahren zur Herstellung einer solchen Folie sowie eine besondere Verwendung.

Folien in Form von mehrschichtige Verbundfolien zur Beschichtung bzw. als Oberflächen von jedweden Gegenständen sind im Stand der Technik umfassend bekannt, so auch bei der Oberflächengestaltung von Möbeln und bei Innenverkleidungsteilen von Fahrzeugen, insbesondere von Kraftfahrzeugen. Bei Letzteren werden genarbte, gemusterte, oder fein strukturiert Kunststoffhäute als Oberflächen für die Innenverkleidung eingesetzt, hier oft als relativ weiche unterschäumte Folien mit angenehmer Haptik etwa für die Verkleidung von Armaturenbrettern oder die Innenschalen von Türen etc. In entsprechender Anpassung von Festigkeit und Design werden solche Folien natürlich auch für andere hochwertig beschichtete Waren genutzt.

Folien für die Innenverkleidung von Kraftfahrzeugen, für Möbel, Taschen etc., landläufig auch als Kunstleder bezeichnet, besitzen oft einen mehrschichtigen Aufbau, sind oft unterschäumt und zeigen auf ihrer Oberseite dreidimensional strukturierte Oberflächen in verschiedensten Formen und Ausführungen. Der mehrschichtige Aufbau besteht in aller Regel aus einer oberen Deck- oder Dekorschicht, die mit der geprägten oder eingeformten Oberfläche versehen ist, und aus einer oder mehreren Unterschichten. Die Deckschicht ist in der Regel mit einer Lackschicht versehen und kann auch eingefärbt werden. Durch entsprechendes Einstellen der Schichten, auch durch angepasste Weichheit oder durch die bereits genannten geschäumten Schichten entsteht eine ansprechende Haptik, d.h. eine angenehm "weiche" Griffigkeit der Kunststofffolie sowie auch ein bestimmter Glanz

Im Stand der Technik sind zur Herstellung solcher Kunststoffhäute verschiedene Verfahren bekannt, zum Beispiel Walz- und/oder Prägeverfahren zur Herstellung von "endlosen" Folienbahnen aus thermoplastischem Kunststoff, oder Verfahren zur Herstellung von werkzeugfallenden einzelnen Formhäuten, also von Kunststoff-Formteilen.

Der zum Beispiel im Bereich der Fahrzeugausrüstungen immer mehr zunehmende Bedarf an Komforteinrichtungen führt nicht nur in diesen Bereichen dazu, dass der Wunsch nach immer stärkerer Individualisierung von Gegenständen besteht und auch die Einbindung von Funktionen in Gebrauchsgegenstände bzw. deren Oberflächen heute in den Fokus der Kunden rückt.

Bleibt man bei den Fahrzeugen, so richtet sich der Blick neuerdings auf Bezugsmaterialien bzw. flexible Flächenmaterialien mit integrierten Funktions- oder Sensor- oder Signalelementen, insbesondere auch auf die Integration von Beleuchtungen oder Signalleuchten in die zur Beschichtung oder Verkleidung von Bauteilen verwendeten Folien. So wurde auch bereits vorgeschlagen, elektrolumineszente Elemente oder Schichten in oder auf Bauteile bzw. Verkleidungsteilen für den Innenraum von Kraftfahrzeugen anzubringen. Diesbezüglich offenbart die DE 10 2005 038 680 A1 ein Bauteil eines Kraftfahrzeuges mit einer dreidimensionalen Oberfläche, die eine elektroluminiszierende Schicht aufweist und zur Fixierung der Bauteilform mit thermoplastischem Kunststoff hinterspritzt ist. Damit werden im Wesentlichen kleinere nicht-flexible Leuchtkörper, wie z. B. beleuchtete Tastschalter oder Leuchtmittel hergestellt.

Die DE 10 2010 051 166 A1 offenbart ein Verfahren zur Herstellung eines Materials mit einer opaken Oberfläche mit einer bei rückwärtiger Beleuchtung an der Oberfläche sichtbaren Graphik, einem Logo oder einer Animation. Hierbei wird auf einer Folie die Grafik als solche lichtdurchlässig und die Zwischenräume opak gehalten bzw. gestaltet und danach eine lichtdurchlässige Schicht aufgebracht.

Die DE 10 2015 122 689 A1 offenbart eine Verzierungseinrichtung, die aus einer hintergrundbeleuchteten Baugruppe besteht, welche einen Lichtgenerator, einen Lichtleiter, einen Lichtdiffusor und eine zur Sichtseite verchromte Linsenbaugruppe aufweist. Wenn der Lichtgenerator nicht eingeschaltet ist, ist die verchromte Oberfläche der Linsenbaugruppe sichtbar, während bei eingeschaltetem Lichtgenerator die Linsenbaugruppe Licht ausstrahlt.

Die EP 2 269 797 B1 offenbart ein Formteil, dessen Außenschicht als Lichtleiter ausgebildet ist und an seinen Außenrändern eine Verdickung oder einen Anguss aufweist, der das Formteil in Form eines Leuchtkranzes beleuchtet.

Die DE 10 2004 044 035 A1 offenbart ein Verkleidungsteil für den Kfz-Innenraum, welches in seinen äußeren Bereichen mit einem Hohlraum versehen ist, in den ein Lichtleiter einführbar ist.

Die DE 10 2016 106 539 A1 offenbart ein Innenverkleidungsteil für ein Kraftfahrzeug, welches eine Trägerschicht, eine Deckschicht und gegebenenfalls weitere Zwischenschichten aufweist. Die Trägerschicht ist mit einer Perforation versehen, die eine beleuchtete Struktur bilden kann, wenn die Trägerschicht von ihrer Rückseite mit Licht bestrahlt wird.

Die DE10 2006 016 068 A1 offenbart eine schichtartige Beleuchtungskomponente, deren Struktur oder Muster sowohl bei Tag als auch bei Nacht erkennbar sein soll. Dies wird dadurch erreicht, dass auf der Sichtseite eine Dekormaterialschicht aufgebracht ist, die einen ersten, transluzenten Bereich und einen zweiten, nicht transluzenten Bereich aufweist. Die beiden Bereiche sind dazu unterschiedlich eingefärbt.

Die DE 10 2007 041 678 A1 offenbart ein Verbundteil für die Innenausstattung eines Kraftfahrzeugs, welches einen Träger, eine darauf angeordnete Textilschicht und eine Letztere bedeckende Kunststoff-Schutzschicht aufweist. Der Träger kann dabei auch lichtdurchlässig ausgebildet sein, wodurch ein Lichtdurchtritt durch das Verbundteil ermöglicht wird.

Die DE 10 2004 010 974 A1 weist eine schichtartig aufgebaute Beleuchtungskomponente für Fahrzeuge auf, die transluzenten Bereiche beinhaltet. Auf der Sichtseite der Beleuchtungskomponente ist eine Dekormaterialschicht aufgebracht. Die Dekormaterialschicht weist in den transluzenten Bereichen ein Beleuchtungsmaterial und in den nicht transluzenten Bereichen ein Dekormaterial auf.

Im Zuge der Entwicklung eines transluzenten Beschichtungsmaterial stellt die Hintergrundbeleuchtung eine zentrale Problematik dar. Aktueller Stand ist der Einsatz von mehreren LED's auf der Rückseite des Beschichtungsmaterials, die mit einem relativ großen Abstand zur Oberfläche installiert sind. Der große Abstand ist notwendig, um aus mehreren LED Punktlichtquellen beim Durchscheinen eine flächige Lichtquelle werden zu lassen. Dieser Abstand kann zwar durch Diffusoren, d.h. spezielle Kunststoffe, Schäme oder Textilien, verringert werden, jedoch beträgt der Abstand weiterhin eher Zentimeter. Des Weiteren wird durch die Diffusorschicht auch Licht absorbiert, wodurch wieder eine stärkere Lichtquelle verwendet werden muss.

Im Bereich der Display-Beleuchtung von Bildschirmen werden teilweise lichtleitende Strukturen (Folien) eingesetzt um das Licht von einer am Rand angebrachten Lichtquelle auf der gesamten Displayfläche zu verteilen. Diese lichtleitenden Strukturen können aber bisher nicht auf gebogenen oder verformten Oberflächen eingesetzt werden.

Für die flächige Beleuchtung solcher gebogenen oder verformten Oberflächen gibt es verschiedene Idee, die aber mit großen Problemen behaftet sind. Bei einer LED Hintergrundbeleuchtung kann der Abstand der LED zum Oberflächenmaterial verringert werden, wenn die Anzahl der LED's erhöht wird. Hierdurch steigen die Kosten für mehr LED's, die Kühlung und Verdrahtung stark an und machen die Lösung unwirtschaftlich.

Um andererseits den Abstand zwischen Lichtquelle und Oberfläche zu verringern, kann ein transparenter/diffuser Träger für das Beschichtungsmaterial verwendet werden. Durch den Einsatz eines zusätzlichen Trägermaterials müsste die gesamte Konstruktion und Logistik beim Kunden verändert werden, wodurch ebenfalls hohe Kosten entstehen würden, die eine Vermarktung unwirtschaftlich machen. Durch die Verwendung von Diffusoren kommt es, wie bereits dargestellt, zu einer Abschwächung des Lichtes, wodurch stärkere LED's verwendet werden müssen, was dann wieder den erforderlichen Aufwand für Verdrahtung und Kühlung steigert. Ohne entsprechende Maßnahmen kommt es zu einer ungewollten Erwärmung des Oberflächenmaterials und zu einer relativ schnellen Alterung.

Die Problematik, die sich bei einer gewünschten Hinterleuchtung von Kunstleder ergibt, entsteht aus einem Zielkonflikt, der darin besteht, dass einerseits auf ihrer Oberfläche ein Erscheinungsbild gewünscht ist, das in der Ansicht des Kunstleders eine ausreichend "satte" Farbgebung ins Auge fällt, welche in der Regel durch hohe Pigmentierung erreichbar ist und dass andererseits bei Hinterleuchtung ein ausreichendes Durchscheinen von Licht erreicht wird, was üblicherweise eine geringe Pigmentierung erfordert. Im Kraftfahrzeug z.B. sind diesbezügliche gegensätzliche Vorgabe der Automobilhersteller nur schwer zu erfüllen.

Für die Erfindung bestand daher die Aufgabe, ein Beschichtungsmaterial für die Oberflächenbeschichtung von Gegenständen bereitzustellen, welche eine Funktionalisierung in Form einer Beleuchtung oder der Abgabe von Lichtsignalen erlaubt und bei der auch bei gebogenen oder verformten Oberflächen einerseits eine ausreichende Lichtleitung und andererseits genügende Lichtdurchlässigkeit vorhanden ist.

Gelöst wird diese Aufgabe durch die Merkmale des Hauptanspruchs. Weitere vorteilhafte Ausbildungen sind in den Unteransprüchen offenbart.

Dabei weist der Folienverbund innerhalb seines Schichtaufbaus mindestens eine Folie auf, die mit einer gedruckten oder geprägten lichtleitenden oder lichtdurchlässigen Struktur versehen ist.

Durch das erfindungsgemäße Beschichtungsmaterial, bei dem dünne, verformbare Folien mit aufgedruckten lichtleitenden Strukturen eingesetzt werden, kann durch mehrere einzelne Punktlichtquellen wie LED's eine flächige ambiente Beleuchtung realisiert werden. Die Folie könnte auf einfache Weise in die herkömmliche Konstruktion eines transluzenten Beschichtungsmaterials bzw. Oberflächenmaterials integriert werden, wodurch sich für den Kunden einen einfache Verarbeitung realisieren lässt. Durch die lichtleitenden Strukturen kann auch die Lichtquelle in einen nicht sichtbaren Bereich des Bauteils mit besser Kühlung verlagert werden, wodurch eine Alterung des Oberflächenmaterials verringert wird und durch einen effizienteren Einsatz von LED's die Kosten für die Lichtquelle reduziert werden können.

Eine vorteilhafte Weiterbildung besteht darin, dass der Folienverbund eine Folie aus lichtdurchlässigem Material aufweist, welche mit einer solcherart ausgebildeten mindestens einseitigen oberflächlichen Narbung oder Prägestruktur versehen ist, dass durch Reflexion und Brechung an der Narb- oder Prägestruktur für mindestens einen Teil einer in das lichtdurchlässige Material eingebrachten Lichtmenge eine flächige Lichtleitung parallel zur und innerhalb der Folie erfolgt. Bei einem lichtdurchlässigen Material der Folie wird zwar ein Teil des Lichtes durch die Folie hindurch scheinen, daneben ist es aber ohne Probleme möglich, innerhalb der Dicke der Folie eine Verteilung und eine Lichtleitung eines nicht unerheblichen, übrigen Teils des eingebrachten Lichtes zu erzeugen. Die innerhalb der Schichtdicke der Folie befindliche Lichtmenge wird nämlich an den durch die Prägungen entstandenen Unregelmäßigkeiten der "Innenoberflächen" reflektiert und diffus weitergeleitet.

Eine weitere vorteilhafte Alternative besteht darin, dass der Folienverbund eine Folie aus lichtundurchlässigem Material aufweist, welche mit einem auf mindestens einer der Folienoberflächen aufgedrucktem Struktur in Form eines Musters aus lichtdurchlässigem Material versehen ist, wobei das Muster so ausgebildet ist, dass für mindestens einen Teil einer in das lichtdurchlässige Material eingebrachten Lichtmenge eine flächige Lichtleitung parallel zur Folie erfolgt. Hier tritt der oben bereits beschriebenen Effekt dadurch auf, dass eine diffuse Lichtverteilung über die Flächenausdehnung durch die aufgedruckte lichtleitende Struktur erfolgt.

Eine weitere vorteilhafte Ausbildung besteht darin, dass das lichtdurchlässige Material mindestens in den Randbereichen der Folie mit einer Lichtquelle verbunden ist, vorzugsweise mit am oder im Folienverbund angeordneten LED (Light-Emitting Diode). Dadurch ergibt sich ein geringer Wärmeeintrag in das Oberflächenmaterial und ein besseres Erscheinungsbild als Flächenstrahler.

Eine weitere vorteilhafte Ausbildung besteht darin, dass im Folienverbund weitere Folien oder Schichten mit lichtstreuenden oder lichtabsorbierenden Eigenschaften angeordnet sind, vorzugsweise dem lichtdurchlässigen Material benachbart. Das Einbringen weiterer Folien unterstützt die gewünschte Anpassung an Lichtleitung und Durchstrahlung, insbesondere dann wenn nur einzelne Bereiche der gesamten Bauteiloberfläche durchscheinend ausgebildet werden sollen.

Eine weitere vorteilhafte Ausbildung besteht darin, dass die mit einer gedruckten oder geprägten lichtleitenden oder lichtdurchlässigen Struktur versehene Folie so ausgebildet ist, dass an der Oberfläche des Beschichtungsmaterials Lichtkennzeichnungen oder Lichtmuster entstehen. Durch ein entsprechendes Druckmuster/Prägemuster können definierte Strukturen in der Oberfläche beleuchtet werden wodurch sich z.B. das Anzeigen von Symbolen realisiert werden kann.

Eine weitere vorteilhafte Ausbildung besteht darin, dass im Folienverbund neben der Folie mit einer gedruckten oder geprägten lichtleitenden oder lichtdurchlässigen Struktur als weitere Schichten mindestens eine Deckschicht, eine Zwischenschicht, eine oder mehrere Kaschierschichten und eine Trägerschicht vorgesehen sind. Auch diese Art des Schichtaufbaus erlaubt eine Verbesserung der Funktion im Hinblick auf Lichtleitung oder auf das Durchscheinen und führt dazu, dass herkömmliche Verbundschichtsysteme weiter ohne Probleme eingesetzt werden können. Dies ist insbesondere vorteilhaft in Verbindung mit einer weiteren Ausbildung, die darin besteht, dass eine oder mehrere Schichten eine mehr oder weniger starke Pigmentierung aufweisen.

Eine weitere vorteilhafte Ausbildung in diesem Sinne besteht darin, dass die Trägerschicht als Textilschicht ausgebildet ist, vorzugsweise als lichtdurchlässige oder lichtstreuende Textilschicht.

Besonders vorteilhaft lässt sich zur Herstellung des erfindungsgemäßen Beschichtungsmaterials ein Verfahren verwenden, welches nach dem so genannten Umkehrstreichverfahren arbeitet, wobei die Herstellung in folgenden Schritten erfolgt:
- Aufbringen eines die Deckschicht bildenden Deckstrichs aus einem pastösen Kunststoffmaterial auf eine Hilfsfolie,
- Aufbringen mindestens einer eine Zwischenschicht bildenden Zwischenstrichs aus einem pastösen Kunststoffmaterial auf die Deckschicht,
- Aufbringen einer Folie, die mit einer gedruckten oder geprägten lichtleitenden oder lichtdurchlässigen Struktur versehen ist,
- Aufbringen einer textilen Trägerschicht auf den bestehenden Schichtverbund,
wobei zwischen den einzelnen Schichten ggf. Kaschierschichten oder Kleberschichten aus einem pastösen Kunststoffmaterial aufgebracht werden, wobei nach ausreichender Gelierung bzw. Trocknung des Folienverbunds die Hilfsfolie abgezogen wird.

Wie bereits dargestellt, lässt sich das erfindungsgemäße Beschichtungsmaterial besonders gut als Beschichtung eines Innenverkleidungsteils für ein Fahrzeug, da lediglich wenige Umstellungen beim Herstellungsverfahren für solche Verkleidungsteile erforderlich sind. Dasselbe gilt für die Verwendung des erfindungsgemäßen Beschichtungsmaterials als Beschichtung von Möbeln, Einrichtungsteilen oder Gebäuden oder als Fußbodenbelag, vorzugsweise in Flugzeugen.

Anhand eines Ausführungsbeispiels soll die Erfindung näher erläutert werden.

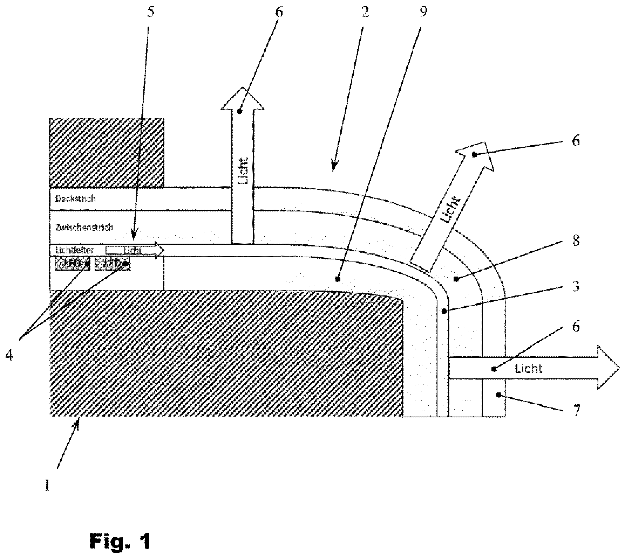

Fig. 1 zeigt schematisch und in Form einer vergrößerten Prinzipskizze einen Schnitt durch einen Eckbereich eines Innenverkleidungsteil 1 für ein Kraftfahrzeug und eine darauf aufgebrachte Oberflächenbeschichtung, nämlich ausgebildet als lichtleitendes und/oder mindestens partiell lichtdurchlässiges, flächiges Beschichtungsmaterial 2 aus Kunststoff. Das Beschichtungsmaterial ist als mehrschichtiger Folienverbund ausgebildet, wobei der Folienverbund innerhalb seines Schichtaufbaus mindestens eine Folie 3 aufweist, die hier mit einer geprägten lichtleitenden und lichtdurchlässigen Struktur versehen ist.

Die Folie 3 besteht aus lichtdurchlässigem Material und ist mit einer solcherart ausgebildeten mindestens einseitigen oberflächlichen Narbung oder Prägestruktur versehen, dass durch Reflexion und Brechung an der Narb- oder Prägestruktur für mindestens einen Teil einer in das lichtdurchlässige Material eingebrachten Lichtmenge eine flächige Lichtleitung parallel zur und innerhalb der Folie erfolgt.

Die Lichtmenge wird hierbei durch die LED 4 eingebracht. Die Pfeile 5 und 6 zeigen schematisch die Lichtleitung innerhalb der Folie und verdeutlichen, das die Folie einerseits als lichtleitendes (Pfeil 5) und andererseits mindestens partiell lichtdurchlässiges Element (Pfeile 6) ausgebildet ist.

In dem das Beschichtungsmaterial bildenden Folienverbund sind neben der Folie mit der geprägten lichtleitenden oder lichtdurchlässigen Struktur als weitere Schichten eine Deckschicht 7, eine Zwischenschicht 8, und eine Trägerschicht 9 vorgesehen. Die LED 4 sind dabei innerhalb der Trägerschicht und an deren Grenze zur Folie angeordnet.

Zwischen der Deckschicht und der Zwischenschicht sowie oberhalb der Trägerschicht sind hier nicht näher dargestellte Kaschierschichten angeordnet.

### Bezugszeichenliste

### (Teil der Beschreibung)

- 1: Innenverkelidungsteil
- 2: Beschichtungsmaterial
- 3: Folie
- 4: LED
- 5: Lichtleitung
- 6: Lichtdurchtritt
- 7: Deckschicht
- 8: Zwischenschicht
- 9: Trägerschicht

## Patentansprüche

1. Lichtleitendes und/oder mindestens partiell lichtdurchlässiges, flächiges Beschichtungsmaterial (2) aus Kunststoff als Oberflächenbeschichtung eines Gegenstands, wobei das Beschichtungsmaterial als mehrschichtiger Folienverbund ausgebildet ist, **dadurch gekennzeichnet, dass** der Folienverbund innerhalb seines Schichtaufbaus mindestens eine Folie (3) aufweist, die mit einer gedruckten oder geprägten lichtleitenden oder lichtdurchlässigen Struktur versehen ist.

2. Beschichtungsmaterial nach Anspruch 1, bei dem der Folienverbund eine Folie aus lichtdurchlässigem Material aufweist, welche mit einer solcherart ausgebildeten mindestens einseitigen oberflächlichen Narbung oder Prägestruktur versehen ist, dass durch Reflexion und Brechung an der Narb- oder Prägestruktur für mindestens einen Teil einer in das lichtdurchlässige Material eingebrachten Lichtmenge eine flächige Lichtleitung parallel zur und innerhalb der Folie (3) erfolgt.

3. Beschichtungsmaterial nach Anspruch 1, bei dem der Folienverbund eine Folie aus lichtundurchlässigem Material aufweist, welche mit einem auf mindestens einer der Folienoberflächen aufgedrucktem Struktur in Form eines Musters aus lichtdurchlässigem Material versehen ist, wobei das Muster so ausgebildet ist, dass für mindestens einen Teil einer in das lichtdurchlässige Material eingebrachten Lichtmenge eine flächige Lichtleitung parallel zur Folie (3) erfolgt.

4. Beschichtungsmaterial nach einem der Ansprüche 1 bis 3, bei dem das lichtdurchlässige Material mindestens in den Randbereichen der Folie mit einer Lichtquelle verbunden ist, vorzugsweise mit am oder im Folienverbund angeordneten LED (4, Light-Emitting Diode).

5. Beschichtungsmaterial nach einem der Ansprüche 1 bis 4, bei dem im Folienverbund weitere Folien oder Schichten mit lichtstreuenden oder lichtabsorbierenden Eigenschaften angeordnet sind, vorzugsweise dem lichtdurchlässigen Material benachbart.

6. Beschichtungsmaterial nach einem der Ansprüche 1 bis 5, bei dem die mit einer gedruckten oder geprägten lichtleitenden oder lichtdurchlässigen Struktur versehene Folie so ausgebildet ist, dass an der Oberfläche des Beschichtungsmaterials Lichtkennzeichnungen oder Lichtmuster entstehen.

7. Beschichtungsmaterial nach einem der Ansprüche 1 bis 6, bei dem im Folienverbund neben der Folie mit einer gedruckten oder geprägten lichtleitenden oder lichtdurchlässigen Struktur als weitere Schichten mindestens eine Deckschicht (7), eine Zwischenschicht (8), eine oder mehrere Kaschierschichten und eine Trägerschicht (9) vorgesehen sind.

8. Beschichtungsmaterial nach Anspruch 7, bei dem eine oder mehrere Schichten eine Pigmentierung aufweisen.

9. Beschichtungsmaterial nach Anspruch 7 oder 8, bei dem die Trägerschicht (9) als Textilschicht ausgebildet ist, vorzugsweise als lichtdurchlässige oder lichtstreuende Textilschicht.

10. Verfahren zur Herstellung eines Beschichtungsmaterials nach Anspruch 7 bis 9 nach dem Umkehrstreichverfahren, wobei die Herstellung in folgenden Schritten erfolgt:
- Aufbringen eines die Deckschicht (7) bildenden Deckstrichs aus einem pastösen Kunststoffmaterial auf eine Hilfsfolie,
- Aufbringen mindestens einer eine Zwischenschicht (8) bildenden Zwischenstrichs aus einem pastösen Kunststoffmaterial auf die Deckschicht,
- Aufbringen einer Folie, die mit einer gedruckten oder geprägten lichtleitenden oder lichtdurchlässigen Struktur versehen ist,
- Aufbringen einer textilen Trägerschicht (9) auf den bestehenden Schichtverbund,
wobei zwischen den einzelnen Schichten ggf. Kaschierschichten oder Kleberschichten aus einem pastösen Kunststoffmaterial aufgebracht werden, wobei nach ausreichender Gelierung bzw. Trocknung des Folienverbunds die Hilfsfolie abgezogen wird.

11. Verwendung eines Beschichtungsmaterials nach Anspruch 1 bis 9 als Beschichtung eines Innenverkleidungsteils für ein Fahrzeug.

12. Verwendung eines Beschichtungsmaterials nach Anspruch 1 bis 10 als Beschichtung von Möbeln, Einrichtungsteilen oder Gebäuden.

13. Verwendung eines Beschichtungsmaterials nach Anspruch 1 bis 10 als Fußbodenbelag, vorzugsweise in Flugzeugen.
